# FASCICULE DE BREVET EUROPEEN

(11) **EP 3 362 710 B1**
(45) Date de publication et mention de la délivrance du brevet: **06.05.2020**
(21) Numéro de dépôt: 16785205.2
(22) Date de dépôt: 22.09.2016
(51) Int. Cl.: F25D 19/00, F16J 15/02

(54) **JOINT MAGNETIQUE POUR MACHINES CRYOGENIQUES**
MAGNETISCHE DICHTUNG FÜR KRYOGENE MASCHINEN
MAGNETIC SEAL FOR CRYOGENIC MACHINES

(30) Priorité: 13.10.2015 FR 1559725
(43) Date de publication de la demande: 22.08.2018
(73) Titulaire: L'Air Liquide Société Anonyme pour l'Etude et l'Exploitation des Procédés Georges Claude, 75007 Paris (FR)
(72) Inventeur: PATHIER, Didier, 78960 Voisins Le Bretonneux (FR); REYMOND, Christian, 95160 Montmorency (FR); SCHWARZINGER, Joachim, A-3400 Klosterneuburg (AT); ALGOET, Jo, 8953 Wijtschate (BE); MOZIAR, Caroline, Geulph, Ontario N1E 5E6 (CA)
(74) Mandataire: Mellul-Bendelac, Sylvie Lisette
(86) Numéro de dépôt international: PCT/FR2016/052402
(87) Numéro de publication internationale: WO 2017/064381

(56) Documents cités:
- FR-A- 1 026 208
- FR-A1- 2 813 244
- FR-A5- 2 230 242
- US-A- 5 975 661
- US-A1- 2004 189 165
- US-A1- 2009 039 751
- US-A1- 2011 148 265

## Description

La présente invention concerne le domaine des appareils cryogéniques utilisés pour la transformation ou le stockage de produits alimentaires, médicaux ou biologiques, tels que tunnels, armoires etc.....

On s'intéresse donc ici aux équipements qui comportent une ou plusieurs portes telles des portes à charnière ou à guillotine, et l'on peut citer ici les exemples des armoires de surgélation, des armoires de cryothérapie, des armoires ou cuves de stockage de produits médicaux ou biologiques de type cellules, sang ou embryons, mais aussi les surgélateurs linéaires munis de portes (tunnels à tapis et à portes), es bains d'immersion à porte, les systèmes cryogéniques vibrants à porte, ou encore les systèmes cryogéniques à tambour à porte.

Mais on s'intéresse également aux machines qui sont munies d'un système de capot(s) relevable(s) ou basculable(s) manuellement ou mécaniquement telles les tunnels à tapis, les tambours et les matériels spécifiques de surgélation cryogénique à capot(s) se relevant électriquement, pneumatiquement, hydrauliquement ou à la main avec un système mécanique.

Dans ce domaine, un problème bien connu des utilisateurs et des responsables de l'entretien de telles machines est lié aux joints qui équipent ces machines, joints qui doivent supporter des températures extrêmes et sont ainsi soumis à rude épreuve. Leur durée de vie est souvent limitée et la maintenance n'est pas aisée à réaliser. De plus, la zone de fixation du joint est souvent une zone de rétention propice aux développements bactériens.

Les joints existants les plus répandus sont en silicone et présentent une forme de P. La matière silicone supporte assez bien les grandes variations de température, elle reste assez flexible aux basses températures. Mais malgré les bonnes propriétés du silicone, ce joint n'est pas indestructible et il s'use avec le temps, il faut donc le remplacer périodiquement.

Par ailleurs, la forme en P permet une fixation simple par pincement de la lèvre au moyen de vis. Ce système est simple mais il ne respecte pas les règles de conception hygiénique des matériels destinés aux industries alimentaires, il n'est pas démontable durant le nettoyage de l'équipement et la zone pincée n'est jamais nettoyée et est une source potentielle de contaminations microbiennes.

La maintenance de ce type de joint est d'une manière générale assez longue mais assez simple sauf pour les zones à accès limité où la maintenance est particulièrement complexe et longue.

En résumé, les joints existants présentent donc essentiellement deux inconvénients :
- Etant soumis à de fortes variations de température (typiquement +20 à -100°C), l'usure des joints est rapide et leur maintenance est complexe et longue à réaliser.
- Le système de fixation des joints présente de nombreuses zones de rétention bactériennes et reste difficile à nettoyer.

Des systèmes de joints aimantés sont connus de US 5 975 661 A, US 2011/148265 A et FR 2813244 A.

On comprend donc qu'une solution technique offrant un joint qui serait fixé sur la machine avec un système hygiénique et facile à nettoyer serait très intéressante pour les utilisateurs de telles machines. De même, un joint dont le remplacement pourrait être effectué facilement et rapidement serait très intéressant pour les services de maintenance des usines agro-alimentaires utilisatrices de telles machines.

Comme on le verra plus en détails dans ce qui suit, la solution technique proposée par la présente invention a notamment pour objectif de rendre le nettoyage du joint possible tous les jours, sans opération complexe, et de rendre la maintenance facile même dans les zones à accès difficile comme le sont les zones sous les portes. En revanche, cette solution n'a pas pour objectif de diminuer les opérations de maintenance en augmentant la durée de vie du joint.

Selon l'invention, le joint d'étanchéité comporte une première partie, réalisée dans une matière molle et élastique, constituant une forme, forme apte à être plaquée entre deux éléments de l'appareil pour faire joint.

Cette première partie comporte au sein de sa structure (ou en une surface de sa structure) une ou plusieurs plaques en métal magnétique.

Le système de joint comporte de plus une seconde partie, constituée d'un ou de plusieurs aimants, aptes à être positionnés dans la structure de la machine, à l'endroit ou aux endroits devant supporter un joint (et devant venir en regard de la « forme » ci-dessus évoquée), aimants préférentiellement régulièrement espacés.

Et pour mieux visualiser l'invention, on explicite ci-dessous un mode préféré de mise en oeuvre de l'invention où la « forme » évoquée ci-dessus est celle d'un tube :
- le joint comprend une première partie constituée d'une matière molle et élastique, supportant les températures très basses sans devenir rigide, par exemple de type « Knitmesh™ », matière formée d'un ensemble de mailles tressées ou « tricotées » inox fines et élastiques. Cette matière est avantageuse pour former la partie qui doit rester flexible et élastique dans le joint, quelle que soit la température. Cette matière de fils métalliques tricotés est préférée selon l'invention mais on peut également envisager d'autres solutions et notamment l'utilisation de silicone ou de toute autre matière molle et élastique, ou encore d'un tube étanche rempli d'air ou de gaz, ou encore d'un tricotage de fils plastiques.
- à titre d'exemple de mise en œuvre, une des matières évoquées ci-dessus est alors emprisonnée dans un tube (de section quelconque) réalisé de manière étanche aux entrées d'eau, tube réalisé par exemple en matière plastique, qui reste flexible aux basses températures même s'il peut perdre en élasticité. Cependant, la matière molle en question (telle le Knitmesh™) reste élastique et permet de compenser le défaut que peut présenter le tube extérieur.
- dans ce tube sont insérées une ou des plaques en métal magnétique, métal qui est attiré par un aimant.
- comme indiqué plus haut, dans la structure de la machine considérée (armoire, tunnel etc...), typiquement aux endroits qui doivent supporter un joint, sont alors insérés un ou des aimants, préférentiellement régulièrement espacés.

Lorsque la machine est prête à fonctionner, l'utilisateur peut alors positionner le joint sur la machine, ce dernier va naturellement être attiré par le ou les aimants et se positionner à l'endroit désiré.

Ainsi, le joint est fixé à la machine sans support visible, il n'y a donc pas de pièces supports difficiles à nettoyer.

Au moment du nettoyage de la machine, le joint peut être facilement retiré (en tirant dessus sans outil). Le support de la machine est alors lisse et sans joint. Il peut être très facilement nettoyé et aucune zone de rétention ne rend ce lavage difficile. Le joint peut lui aussi être facilement nettoyé sans aucune zone de rétention.

Au moment de la reprise de la production, le joint est facilement remis en place et maintenu par les aimants comme expliqué plus haut.

Pour toutes ces raisons, en terme de maintenance, le démontage d'un joint abimé et son remplacement par un joint neuf ne prend que quelques secondes.

La présente invention concerne alors un système de joint d'étanchéité, apte à équiper un appareil cryogénique utilisé pour la transformation ou le stockage de produits alimentaires, médicaux ou biologiques, se caractérisant de la façon suivante :
- le système de joint comporte une première partie, réalisée dans une matière molle et élastique, constituant une forme, apte à être plaquée entre deux éléments de l'appareil pour faire joint ;
- ladite première partie comporte au sein de sa structure une ou plusieurs plaques en métal magnétique ;
- le système de joint comporte de plus une seconde partie, constituée d'un ou de plusieurs aimants, aptes à être positionnés dans la structure de la machine, à l'endroit ou aux endroits devant supporter un joint, aimants préférentiellement régulièrement espacés.

On le conçoit à la lecture de ce qui précède, ce nouveau système de joint est simple et peu couteux, et permet de rendre les joints des machines cryogéniques considérées hygiéniques et d'un entretien très facile.

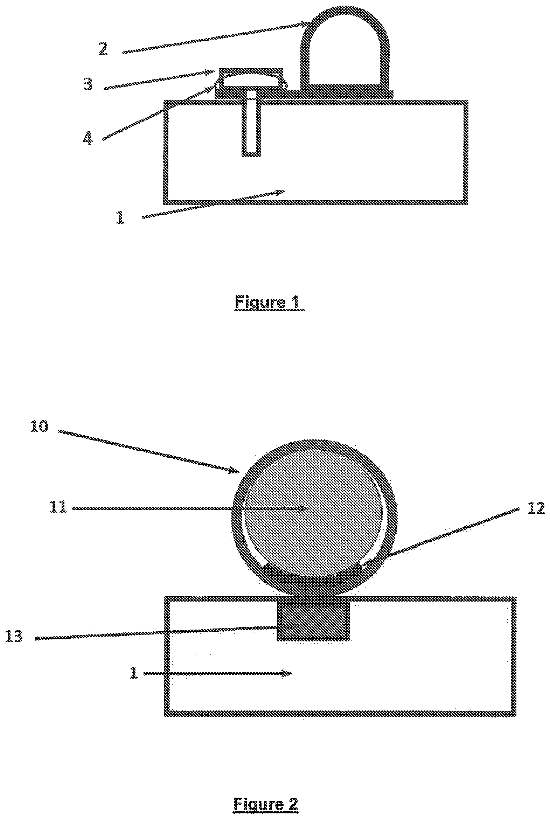

La figure 1 annexée illustre la structure d'un joint silicone en forme de « P » équipant actuellement couramment de telles machines.

On reconnait sur cette figure les éléments suivants :
- le châssis 1 de la machine (par exemple une armoire) ;
- le joint 2 en forme de « P » ;
- ce joint est traditionnellement fixé, par exemple sur la portion de châssis sur laquelle une porte va venir au contact, par une vis 3 ;
- et l'on visualise alors bien la zone 4 de rétention bactérienne, entre joint et châssis, et entre vis et joint.

La figure 2 annexée illustre alors un mode de réalisation d'un joint conforme à l'invention, joint en forme de tube cylindrique, fonctionnant de façon totalement différente de ceux de l'art antérieur, figure où l'on reconnaît :
- une portion de châssis 1 de la machine devant être équipée d'un joint ;
- un tube (10) sans fin, tube ici cylindrique réalisé par exemple en matière plastique, et dans lequel est disposée une matière molle et élastique (11), par exemple une matière formée d'un ensemble de tresses métalliques telle que la matière Knitmesh™ , ladite matière n'occupant pas la totalité du volume intérieur du tube comme on le voit sur la figure;
- le volume intérieur libre comporte alors par ailleurs une ou plusieurs plaques (12) en métal magnétique, préférentiellement positionnée(s) comme sur la figure en périphérie externe dudit volume intérieur ;
- pour lui faire face et permettre l'attraction magnétique entre les deux parties du système de joint, le système de joint comporte de plus une seconde partie, constituée d'un ou de plusieurs aimants (13), positionnés dans la structure de la machine, à l'endroit ou aux endroits devant supporter un joint, aimants préférentiellement régulièrement espacés (par exemple régulièrement espacés dans la profondeur de la figure le long du tube 10).

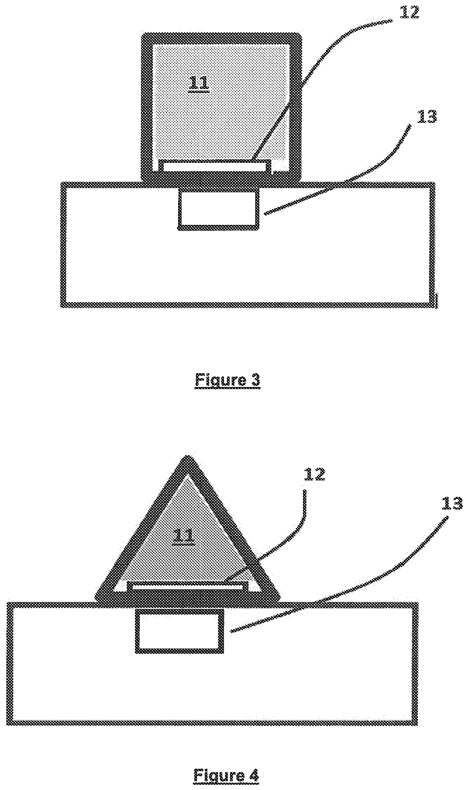

Les figures 3 et 4 annexées illustrent des variantes du mode de réalisation présenté en figure 2. Et ces figures illustrent notamment le fait que le joint peut prendre différentes formes, carrée ou rectangle dans le cas de la figure 3, triangle dans le cas de la figure 4. Ces figures 3 et 4 parlent d'elles mêmes après avoir bien explicité la figure 2, et nous ne les décrierons donc pas plus avant.

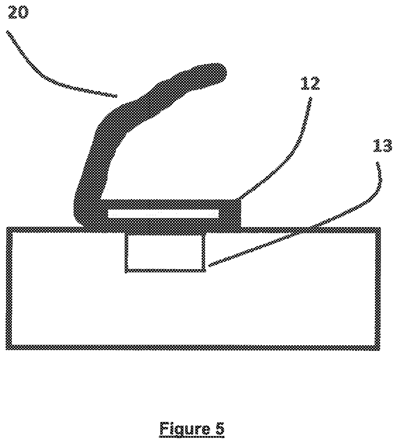

La figure 5 présente quant à elle un autre mode de réalisation du joint conforme à l'invention, puisque la « forme » adoptée ici n'est pas celle d'un tube, mais celle d'une « lèvre » comme nous allons le voir.

Dans ce cas, le principe de fixation reste le même, une partie métallique interne à la première partie du joint est aimantée par des aimants présents dans la structure de la machine. C'est toujours ce phénomène d'aimantation qui est utilisé pour fixer le joint sur son support. En revanche, ici, le joint est constitué d'une lèvre dont une partie est solidaire de l'élément métallique de la machine devant connaître un joint, tandis que l'autre est flexible et vient faire joint lorsque la porte se ferme, lèvre élaborée préférentiellement dans une matière élastique plastique.

Dans ce cas, on n'utilise donc pas de tube pour contenir une matière molle et élastique, c'est la matière constituant la lèvre, élastique, qui réalise le joint. Cette matière on l'a dit peut être du plastique (restant élastique à basse température), mais elle peut également être constituée d'une feuille d'inox (restant élastique à basse température) ou d'un matériau composite (restant élastique à basse température).

Comme il apparaitra clairement à l'homme du métier, de très nombreuses configurations de tubes et d'aimants sont possibles pour répondre à chaque configuration de machine : une seule plaque métallique, plusieurs plaques métalliques, par exemple deux plaques des deux cotés de la matière molle pour pouvoir monter le joint dans les deux sens, ou encore la mise en place de plusieurs petites plaques mises bout à bout au sein du tube, d'un seul coté ou des deux cotés de la matière molle etc....

## Revendications

1. Système de joint d'étanchéité, apte à équiper un appareil cryogénique utilisé pour la transformation ou le stockage de produits alimentaires, médicaux ou biologiques, appareil muni d'une porte, se caractérisant de la façon suivante :
- le système de joint comporte une première partie, réalisée dans une matière molle et élastique, constituant une forme (10, 20), apte à être plaquée entre deux éléments de l'appareil pour faire joint ;
- ladite première partie comporte au sein de sa structure une ou plusieurs plaques (12) en métal magnétique ;
- le système de joint comporte de plus une seconde partie, constituée d'un ou de plusieurs aimants (13), aptes à être positionnés dans la structure de la machine, à l'endroit ou aux endroits devant supporter un joint, aimants préférentiellement régulièrement espacés,
et en ce que en phase de fonctionnement de l'appareil, la forme molle est positionnée et fixée sur l'appareil à l'endroit désiré pour être attirée par le ou lesdits aimants, apte ainsi à faire joint quand la porte de l'appareil se ferme.

2. Système de joint d'étanchéité selon la revendication 1, **se caractérisant en ce que** :
- ladite première partie est constituée par un tube (10), tube réalisé par exemple en matière plastique, et dans lequel est disposée une matière molle et élastique (11), par exemple une matière formée d'un ensemble de fils tressés ou tricotés métalliques ou plastiques, ladite matière n'occupant pas la totalité du volume intérieur du tube ;
- le volume intérieur au tube comporte par ailleurs une ou plusieurs plaques (12) en métal magnétique, préférentiellement positionnée(s) en périphérie externe dudit volume intérieur.

3. Système de joint d'étanchéité selon la revendication 1, **se caractérisant en ce que** ladite forme est celle d'une « lèvre » (20), dont une portion est solidaire d'un élément de la machine devant connaître un joint, tandis qu'une autre portion est flexible et vient faire joint lorsqu'elle est plaquée entre lesdits deux éléments de l'appareil.

4. Système de joint d'étanchéité selon la revendication 3, **se caractérisant en ce que** ladite lèvre est élaborée en une matière plastique, ou bien est constituée d'une feuille d'inox, ou bien encore est élaborée en un matériau composite.

## Patentansprüche

1. Abdichtungssystem, geeignet zur Ausrüstung einer kryogenen Einrichtung, die für die Verarbeitung oder die Lagerung von Lebensmitteln, medizinischen oder biologischen Produkten verwendet wird, wobei die mit einer Tür versehene Einrichtung wie folgt gekennzeichnet ist:
- das Dichtungssystem umfasst einen ersten Teil, aus einem weichen und elastischen Material gefertigt, der eine Form (10, 20) bildet, die geeignet ist, zwischen zwei Elementen der Einrichtung festgedrückt zu werden, um eine Dichtung herzustellen;
- der erste Teil umfasst innerhalb seiner Struktur eine oder mehrere Platten (12) aus magnetischem Metall;
- das Dichtungssystem umfasst zudem einen zweiten Teil, der aus einem oder mehreren Magneten (13) besteht, die geeignet sind, in der Maschinenstruktur an der Stelle oder den Stellen positioniert zu werden, die eine Dichtung tragen sollen, wobei die Magnete bevorzugt gleichmäßig beabstandet sind,
und dadurch, dass während des Betriebs der Einrichtung die weiche Form auf der Einrichtung an der gewünschten Stelle positioniert und befestigt wird, um von dem oder den Magneten angezogen zu werden, sodass sie geeignet ist, beim Schließen der Einrichtungstür eine Dichtung zu bilden.

2. Abdichtungssystem nach Anspruch 1, **dadurch gekennzeichnet, dass**:
- der erste Teil aus einem Rohr (10) besteht, wobei das Rohr beispielsweise aus Kunststoff gefertigt ist und darin ein weiches und elastisches Material (11) angeordnet ist, beispielsweise ein Material, das aus einer Montage von geflochtenen oder gestrickten Metall- oder Kunststofffäden gebildet ist, wobei das Material nicht das gesamte Innenvolumen des Rohrs ausfüllt;
- das Innenvolumen des Rohrs außerdem eine oder mehrere Platten (12) aus magnetischem Metall umfasst, die bevorzugt am äußeren Umfang des Innenvolumens angeordnet ist (sind).

3. Abdichtungssystem nach Anspruch 1, **dadurch gekennzeichnet, dass** es sich bei der Form um die Form einer "Lippe" (20) handelt, von der ein Abschnitt fest mit einem abzudichtenden Element der Maschine verbunden ist, während ein anderer Abschnitt flexibel ist und eine Dichtung bildet, wenn er zwischen den beiden Elementen der Einrichtung festgedrückt wird.

4. Abdichtungssystem nach Anspruch 3, **dadurch gekennzeichnet, dass** die Lippe aus einem Kunststoffmaterial erstellt ist oder aus einer Edelstahlfolie besteht oder aus einem Verbundmaterial erstellt ist.

## Claims

1. Sealing system, capable of equipping a cryogenic apparatus used for transforming or storing food, medical or biological products, apparatus provided with a door, characterised as follows:
- the sealing system comprises a first part, made from a soft and resilient material, constituting a shape (10, 20), capable of being pressed between two elements of the apparatus to form a seal;
- said first part comprises, within the structure thereof, one or more magnetic metal plates (12);
- the sealing system in addition comprises a second part, constituted of one or more magnets (13), capable of being positioned in the structure of the machine, at the location or locations that need to support a seal, said magnets preferably being spaced at regular intervals,
and in that in the operating phase of the apparatus, the soft shape is positioned and fastened onto the apparatus at the desired location to be attracted by said magnet(s), thus capable of forming a seal when the door of the apparatus closes.

2. Sealing system according to claim 1, **characterised in that**:
- said first part is constituted by a tube (10), tube made for example from a plastic material, and wherein is disposed a soft and resilient material (11), for example a material formed from a set of metal or plastic woven or knitted wires, said material not occupying the entire interior volume of the tube;
- the interior volume in the tube moreover comprises one or more magnetic metal plates (12), preferably positioned at the external periphery of said interior volume.

3. Sealing system according to claim 1, **characterised in that** said form is that of a "lip" (20), of which a portion is integral with an element of the machine that is to know a seal, while another portion is flexible and makes a seal when it is pressed between said two elements of the apparatus.

4. Sealing system according to claim 3, **characterised in that** said lip is made from a plastic material, or is constituted of a stainless steel sheet, or is developed from a composite material.
